# DEMANDE DE BREVET EUROPEEN

(11) **EP 0 908 432 A2**
(43) Date de publication de la demande: **14.04.1999**
(21) Numéro de dépôt: 98117348.7
(22) Date de dépôt: 14.09.1998
(51) Int. Cl.: C05F 17/00, C05F 9/04

(54) **Procédé de production d'engrais organique à partir des déchets urbains solides, de la fraction organique de ces derniers ou de residus "verts".**

(30) Priorité: 16.09.1997 IT VI970156
(71) Demandeur: S.I.T. Società Igiene Territorio s.r.l., 36040 Brendola (Vicenza) (IT)
(72) Inventeur: Greselin, Michele, 36050 Cartigliano (Vicenza) (IT); Vaccari, Giuseppe, 44100 Ferrara (IT); Dosi, Elisabetta, 44100 Ferrara (IT); Mantovani, Giorgio, 44100 Ferrara (IT)
(74) Mandataire: Bettello, Pietro, Dott. Ing.

(57) **Abrégé**

Le compost issu de déchets urbains solides (RSU), de la fraction organique (FORSU) de ces derniers ou des déchets 〈〈 verts 〉〉 trouve sa principale utilisation dans le domaine agronomique, en tant qu'amendement organique à utiliser en grande quantité en plein champ. Toutefois, selon la réglementation en vigueur, il ne peut pas être qualifié d'engrais organique parce que, normalement, il contient une teneur en azote inférieure à 3%. La réglementation en vigueur interdit en outre l'addition artificielle d'azote au compost. Selon l'invention, en mélangeant le compost issu des RSU, de la FORSU ou de déchets 〈〈 verts 〉〉, avec les mélasses dans une proportion propre à porter la teneur en azote totale à au moins 1%, la fermentation du mélange produit la transformation microbienne de l'azote dispersible, avec formation d'une matière pouvant être utilisée utilement en plein champ, sans risque de lessivage des substances nutritives et avec possibilité d'appeler le mélange engrais organique en respectant la loi.

## Description

La présente invention concerne un procédé pour la production d'engrais organique à partir des déchets urbains solides (désignés dans la suite par le terme de RSU) ou de la fraction organique de ces derniers (désignée dans la suite par le terme de FORSU), ainsi que des résidus dits "verts", constitués par les déchets de fauchage, d'élagage de haies et d'arbres et ainsi que par du bois non traité.

Ainsi qu'il est connu, les déchets urbains solides sont collectés par des entreprises spécialisées dans leur traitement , en principe, ils sont envoyés directement à la décharge pour leur élimination.

Du fait de la progression constante de l'occupation par l'homme des territoires affectés autrefois à l'agriculture ou, en tout cas, pas particulièrement urbanisés, il devient de plus en plus difficile de trouver des sites pour lesdites décharges.

En particulier, il est difficile aussi bien de procéder aux expropriations des surfaces affectées à ces décharges, que de vaincre les résistances des personnes qui habitent dans le voisinage de tels sites et qui, même si elles ne sont pas dotées d'une sensibilité particulière à l'environnement, se battent de toutes leurs forces pour chercher à empêcher la création de telles décharges, généralement en se réunissant en comités ; et ceci, soit sur le plan légal, en cherchant à démontrer que les décisions prises par les organismes qui ont établi la localisation des sites sont illégitimes et que, de toute façon, ladite localisation n'est pas adéquate, soit en faisant pression sur les administrateurs locaux et sur les représentants parlementaires du lieu.

Dans chaque cas, lesdits comités tendent à démontrer qu'il existe sûrement d'autres sites beaucoup plus idoines à ce but, à tel point que, dans les pays anglo-saxons, on parle d'un véritable syndrome de "NIMBY" (never in my back yard = jamais dans ma cour).

De toute façon, même dans le cas où l'on trouve des sites optimaux, convenablement traités, il est évident que les créations de décharges détruisent un précieux territoire qui pourrait être utilisé autrement.

Toutefois, pour réduire la nécessité de réaliser de telles décharges, on a de plus en plus recours à la collecte différenciée des RSU, en séparant les matières qui peuvent être facilement recyclées, comme le verre, le papier et le carton, les métaux et quelques types de matières plastiques.

Ce qui reste des RSU se compose d'une partie dont la mise en décharge ne pose pas de problèmes particuliers (par exemple, le bois, ou les matières inertes en général), mais aussi d'une fraction organique constituée, par exemple, de résidus alimentaires des habitations, restaurants, et cantines aussi bien que de matières issues du soin des jardins et analogues, comme l'herbe, les branches, les feuilles etc..

Un récent décret ministériel a en particulier défini comme résidus "verts" la partie de fraction organique citée au début qui peut être transformée en compost sans contraintes ni autorisations particulières.

La fraction organique a tendance à créer des infiltrations qui sont potentiellement très dangereuses, parce qu'elles sont susceptibles de polluer gravement les couches aquifères.

Pour cette raison, on a cherché à effectuer la collecte différenciée de la FORSU. En particulier, il est possible d'obtenir le compost par le traitement de cette dernière.

Le compost issu de la FORSU ou de résidus 〈〈 verts 〉〉 peut être utilisé en particulier dans la pratique agronomique en qualité d'amendement organique.

Selon la réglementation consécutive au récent décret Ronchi, qui concerne l'élimination des déchets, le compost peut être qualifié d'amendement si la teneur en azote est inférieure à 3% tandis que, si cette teneur excède cette valeur, le compost prend la définition d'engrais organique, ce qui se traduit par une nette augmentation de sa valeur aussi bien économique que pratique.

Etant donné que la réglementation interdit l'addition artificielle d'éléments fertilisants, il s'est révélé en pratique impossible d'obtenir ce pourcentage d'azote à partir de la FORSU. Par ailleurs, il est connu que l'un des plus importants sous-produits de l'industrie sucrière est constitué par les mélasses de betterave et ceci en raison de la quantité de mélasse produite aussi bien qu'en raison de la difficulté d'élimination de ces dernières. Elles sont constituées par ce qui reste du jus de betterave, après la cristallisation du sucre et après la distillation de l'alcool produit à partir de la fraction non cristallisable du sucre extrait des betteraves elles mêmes.

Pendant une certaine période, on les brûlait pour détruire la substance organique, et on utilisait les cendres comme engrais, grâce à la forte teneur en potassium de ces dernières (elles constituaient ce qu'on appelle le salin potassique).

Actuellement, l'introduction des engrais de synthéses a rendu cette pratique irréalisable et, de ce fait, ces mélasses sont éliminées telles quelles en tant qu'engrais, avec de graves limitations dû au fait que leur forme liquide les rend potentiellement dangereuses pour les nappes phréatiques, du fait que leurs constituants s'infiltrent facilement.

D'un autre côté, elles présentent une bonne teneur en azote, et également en d'autres substances potentiellement utiles dans le domaine agronomique.

Le but de la présente invention consiste à résoudre simultanément aussi bien le problème de l'élévation de la teneur en azote dans le compost que celui de l'élimination des mélasses, en évitant de ce fait les inconvénients précités.

Selon l'invention, ce résultat est obtenu en effectuant le mélange des déchets urbains solides, de leur fraction organique ou des résidus 〈〈 verts 〉〉 avec les mélasses de betterave précitées.

De cette façon, il est possible d'élever la teneur en azote du compost, en obtenant un produit qui peut être directement qualifié d'engrais organiques, dans le plein respect des réglementations en vigueur, et on peut en même temps fixer sous une forme solide les substances nutritives contenues dans les mélasses, en réduisant ainsi le risque de contamination et en augmentant la proportion pouvant être éliminée

On décrira ci-après une séquence préférée d'opération capable de permettre une excellente réalisation de l'invention.

En particulier, il faut considérer qu'au moment de l'arrivée à l'installation de compostage, les déchets possèdent une humidité encore trop élevée, de sorte qu'il n'est pas à recommander d'effectuer immédiatement le mélange des mélasses avec la FORSU et avec les résidus 〈〈 verts 〉〉.

On procède donc tout d'abord de la façon suivante :
1) les déchets frais sont introduits dans l'utilisation de compostage à fosse ou à aire et, là, commence la phase de fermentation les déchets sont remélangés au moins deux fois pour les aérer et, dans cette phase ils perdent une quantité plus ou moins grande de liquides par infiltration.
2) Après le deuxième remélange, les déchets sont arrosés avec les mélasses, dans une proportion qui varie avec la teneur moyenne en azote de la matière de départ, afin d'obtenir la teneur désirée (au moins 3%).
   Les mélasses peuvent éventuellement être ajoutées en deux solutions, pour éviter les pertes excessives par infiltration de l'excès de liquide.
3) A la fin de la phase de fermentation tumultueuse, le produit est transporté à une aire pour une phase de maturation lente et, ensuite, il est envoyé à l'utilisation.

Dans le cas où l'on a prévu une installation à tunnel, le mélange s'effectue avant même l'entrée dans le tunnel.

La matière qu'on obtient avec le procédé selon l'invention présente une bonne teneur en azote et en potassium et elle est en mesure d'augmenter la dotation de teneur organique du sol, outre le fait qu'elle présente une forme stable et qu'elle ne subit pas facilement un lessivage des substances nutritives du mélange.

En pratique, cette matière peut représenter un excellent substitut du fumier, que les techniques modernes de gestion des élevages zootechniques ont presque faits disparaître.

On voit en outre que le procédé selon l'invention est simple à mettre en oeuvre, du fait qu'en particulier, il n'exige pas d'équipements spécifiques, ce qui est tout à l'avantage du coût du produit résultant pour ce procédé.

## Revendications

1. Procédé de production d'engrais organique à partir des déchets urbains solides, de la fraction organique de ces derniers ou des résidus 〈〈 verts 〉〉, caractérisé en ce qu'il comprend le mélange desdits déchets avec les mélasses de betterave.

2. Procédé selon la revendication 1, du type qui comprend le traitement des déchets en fosse, caractérisé par le fait de prévoir les étapes suivantes :
- introduction des déchets frais dans l'installation de compostage et début de la phase de fermentation ;
- remélange des déchets au moins deux fois dans le but de les aérer avec perte consécutive de liquides par infiltration ;
- arrosage avec les mélasses jusqu'à obtenir la teneur en azote désiré (au moins 3%) ;
- à la fin de la phase de fermentation tumultueuse, disposition du produit sur une aire pour la phase de maturation lente.

3. Procédé selon la revendication 1, du type qui comprend le traitement des déchets en tunnel, caractérisé par le fait que le mélange est effectué avant l'entrée de la matière dans le tunnel.

4. Procédé selon la revendication 2 ou 3, caractérisé en ce que les mélasses sont ajoutées en au moins deux fois.

5. Engrais organique obtenu par le procédé selon une ou plusieurs des revendications précédentes.
